# EUROPEAN PATENT APPLICATION

(11) **EP 2 287 962 A1**
(43) Date of publication of application: **23.02.2011**
(21) Application number: 09766681.2
(22) Date of filing: 17.06.2009
(51) Int. Cl.: H01M 14/00, H01L 31/04, H01M 2/08

(54) **DYE-SENSITIZED SOLAR CELL AND PROCESS FOR PRODUCING THE DYE-SENSITIZED SOLAR CELL**

(30) Priority: 19.06.2008 JP 2008159826
(71) Applicant: Sony Corporation, Tokyo 108-0075 (JP)
(72) Inventor: MOROOKA, Masahiro, Tokyo 108-0075 (JP); YONEYA, Reiko, Tokyo 108-0075 (JP); TAKADA, Harumi, Tokyo 108-0075 (JP); ORIHASHI, Masaki, Tokyo 108-0075 (JP); ZHU, Cheng, Tokyo 108-0075 (JP); SUZUKI, Yusuke, Tokyo 108-0075 (JP); NODA, Kazuhiro, Tokyo 108-0075 (JP); TADA, Keishi, Tokyo 108-0075 (JP); KUBO, Natsuki, Tokyo 108-0075 (JP); MIKI, Megumi, Tokyo 108-0075 (JP); NAKAMURA, Mitsuhiro, Tokyo 108-0075 (JP)
(74) Representative: Horner, David Richard
(86) International application number: PCT/JP2009/061040
(87) International publication number: WO 2009/154233

(57) **Abstract**

The present invention provides a dye-sensitized solar cell which can obtain a high photoelectric conversion efficiency, which can be manufactured at a low cost, and which is superior in a design property, and a method of manufacturing the same. Dye supporting porous titanium oxide layers 2a to 2d are formed on a transparent conductive substrate 1 so as to display predetermined colors, respectively, and compose predetermined patterns, respectively, in accordance with selection of a thickness, a lamination structure, a particle diameter of titanium oxide fine particles, or a combination ratio of two or more kinds of titanium oxide fine particles when titanium oxide fine particles are composed of the two or more kinds of titanium oxide fine particles different in particle diameter from one another. The transparent conductive substrate 1 having the dye supporting porous titanium oxide layers 2a to 2d formed thereon, and a transparent conductive substrate 3 having a counter electrode 4 formed thereon are stuck to each other through a seal material 5 so that the dye supporting porous titanium oxide layers 2a to 2d, and the counter electrode 4 face each other, and a space defined between the transparent conductive substrate 1 and the transparent conductive substrate 3 is enclosed with an electrolyte layer 6, thereby forming a dye-sensitized solar cell.

## Description

### Technical Field

The present invention relates to a dye-sensitized solar cell and a method of manufacturing the same, and more particularly to a dye-sensitized solar cell which is suitable for being installed in a place which meets the eyes of a human being, and a method of manufacturing the same.

### Background Art

The solar cell as a photoelectric conversion element for converting a solar light into an electric energy exerts an extremely less influence on the global environment because it uses the solar light as the energy source, and thus is expected to be further widely used.

Heretofore, a crystalline silicon system solar cell using either single crystalline or polycrystalline silicon, and an amorphous silicon system solar cell have been mainly used as the solar cell.

On the other hand, a dye-sensitized solar cell which was proposed in 1991 by Graetzel et al. attracts attention because a high photoelectric conversion efficiency can be obtained, the dye-sensitized solar cell can be manufactured at a low cost without requiring a large-scale system in manufacturing the dye-sensitized solar cell unlike the conventional silicon system solar cell, and so forth (for example, refer to Non-Patent Document 1).

A general structure of this dye-sensitized solar cell is such that a dye-sensitized porous semiconductor layer in which a sensitizing dye is supported by a porous semiconductor layer made of a titanium oxide or the like and formed on a transparent conductive substrate, and a counter electrode obtained by forming a platinum layer or the like on a substrate are made to face each other, an outer peripheral portion of the dye-sensitized porous semiconductor layer and the counter electrode is sealed with a seal material, and a space defined between both the electrodes is filled with an electrolyte containing therein an oxidation-reduction seed such as iodine or iodide ions.

### Prior Art Document

### Non-Patent Document

Non-Patent Document 1: Nature, 353, p.737 (1991)

### Summary of Invention

### Technical Problem

In the case where the dye-sensitized solar cell is installed in a place which meets the eye of a human being, when the dye-sensitized solar cell is superior in a design property, the dye-sensitized solar cell is thought to be desirable because the dye-sensitized solar cell can give a viewer a good feeling.

However, as far as the inventors of the present invention know, it has not been proposed that the dye-sensitized solar cell is given the design property until now from this viewpoint.

In the light of the foregoing, a problem to be solved by the invention is to provide a dye-sensitized solar cell which can obtain a high photoelectric conversion efficiency, and which can be manufactured at a low cost and in addition thereto is superior in a design property and a method of manufacturing the same. Technical Solution

In order to solve the problem described above, according to the first invention, there is provided a dye-sensitized solar cell, having:
a transparent conductive substrate;
one or multiple porous titanium oxide layers, on the transparent conductive substrate, made of titanium oxide fine particles and supporting a sensitizing dye(s);
a counter electrode provided so as to face the one or multiple porous titanium oxide layers; and
an electrolyte layer between the one or multiple porous titanium oxide layers and the counter electrode,
in which the one or multiple porous titanium oxide layers are formed so as to display a predetermined color(s), and compose a predetermined pattern(s) in accordance with selection of a thickness, a lamination structure, a particle diameter of the titanium oxide fine particles, or a combination ratio of two or more kinds of titanium oxide fine particles when the titanium oxide fine particles are composed of the two or more kinds of titanium oxide fine particles different in particle diameter from one another.

The counter electrode is typically provided on the transparent conductive substrate. Each of a planar shape of the transparent conductive substrate having the porous titanium oxide layer(s) provided thereon, and a planar shape of the transparent conductive substrate having the counter electrode provided thereon is selected as may be necessary, and thus is not especially limited. Giving a concrete example, a square, a rectangle, a triangle, a circle, and an ellipse or the like can be selected as such a planar shape. Those transparent conductive substrates are disposed so as to be shifted from each other, and an outer peripheral portion of a region held between those transparent conductive substrates is sealed with a seal material. Each of those transparent conductive substrates is typically composed of a substrate obtained by providing a transparent conductive layer on an insulating transparent substrate, and portions of the transparent conductive layers located in the outer peripheral portions of those transparent conductive substrates and sealed with the seal material are removed. A power collecting layer made of a metal having a smaller resistance may be provided on each of the transparent conductive layers located outside the seal material. The extraction of terminals of the dye-sensitized solar cell can be carried out by connecting wirings either to the transparent conductive layers exposed to the outside or to the power collecting layers each made of the metal having the lower resistance. In addition, when a plurality of dye-sensitized solar cells are connected in series with one another in order to assemble a dye-sensitized solar cell module, these dye-sensitized solar cells can be connected in series with one another through the power collecting layers each made of the metal having the lower resistance.

As described above, the one or multiple porous titanium oxide layers are formed so as to display the predetermined color(s), and compose the predetermined pattern(s) in accordance with the selection of the thickness, the lamination structure, the particle diameter of the titanium oxide fine particles, or the combination ratio of the two or more kinds of titanium oxide fine particles when the titanium oxide fine particles are composed of the two or more kinds of titanium oxide fine particles different in particle diameter from one another. Here, the predetermined pattern(s) is(are) determined in accordance with a shape(s) of a pattern(s) of the porous titanium oxide layer(s), and deposition(s) of the porous titanium oxide layer(s) on the transparent conductive substrate. On the other hand, the color(s) which the porous titanium oxide layer(s) shows(show) is(are) determined in accordance with the selection of the parameters described above. The reason for this is because wavelengths, absorption intensities or scattering intensities of a light, of solar lights made incident to the porous titanium oxide layer(s), which is absorbed by the porous titanium oxide layer(s) and a light, of solar lights made incident to the porous titanium oxide layer(s), which is scattered by the porous titanium oxide layer(s) change depending on the parameters described above.

With regard to the particle diameter of the titanium oxide fine particles, in general, an average particle diameter of an original particle is preferably in the range of 1 to 200 nm, and is especially, preferably in the range of 5 to 100 nm. In addition, the titanium oxide fine particles having this average particle diameter are mixed with titanium oxide fine particles having an average particle diameter larger than this average particle diameter, and the incident light is scattered by the titanium oxide fine particles having the larger average particle diameter, thereby making it possible to increase a quantum yield. In this case, the average particle diameter of the titanium oxide fine particles especially mixed is preferably in the range of 20 to 500 nm. An anatase type crystalline titanium oxide is preferably used as a material for the titanium oxide fine particle from a viewpoint of photocatalytic activity.

The one or multiple porous titanium oxide layers described above typically have a thickness which is n (n is an integral number equal to or larger than 1) times as large as a predetermined reference thickness, and n is selected as may be necessary. The porous titanium oxide layers typically have a layer having the same predetermined reference thickness in common with one another, and when the porous titanium oxide layers have a lamination structure, this layer is located in the lowermost layer. By adopting such a structure, the porous titanium oxide layers can be easily formed by carrying out screen printing or the like so as to display the desired colors, respectively.

Although the above layer having the same predetermined reference thickness, for example, is a porous titanium oxide layer having a thickness of 3 µm and made of titanium oxide fine particles having a particle diameter of about 20 nm, the present invention is by no means limited thereto. As an example, the one or multiple porous titanium oxide layers include at least one selected from the group composed of a first porous titanium oxide layer having a thickness of 3 µm and made of titanium oxide fine particles having a particle diameter of about 20 nm, a second porous titanium oxide layer having a thickness of 6 µm and made of titanium oxide fine particles having a particle diameter of about 20 nm, a third porous titanium oxide layer composed of a porous titanium oxide layer having a thickness of 3 µm and made of titanium oxide fine particles having a particle diameter of about 20 nm and a porous titanium oxide layer overlying the porous titanium oxide layer, having a thickness of 3 µm and made of titanium oxide fine particles having a particle diameter of about 400 nm, and a fourth porous titanium oxide layer composed of a porous titanium oxide layer having a thickness of 3 µm and made of titanium oxide fine particles having a particle diameter of about 20 nm, and a porous titanium oxide layer overlying the porous titanium oxide layer, having a thickness of 6 µm, made of titanium oxide fine particles having a particle diameter of about 20 nm and titanium oxide fine particles having a particle diameter of about 400 nm, and containing therein 20 wt% titanium oxide fine particles having the particle diameter of about 400 nm.

When the transparent conductive substrate having either the porous titanium oxide layer(s) or the counter electrode provided thereon is composed of a substrate obtained by providing a transparent conductive layer on an insulating transparent substrate, a material for the transparent substrate is especially by no means limited, and thus various base materials can be used as long as each of them is transparent. A material which is excellent in barrier property against the moisture or the gas which penetrates from the outside into the dye-sensitized solar cell, solvent resistance, weathering resistance, and the like is preferable as the material for the transparent substrate. Specifically, there are given a transparent inorganic substrate made of a quartz, a sapphire, a glass or the like, and a transparent plastic substrate made of polyethylene terephthalate, polyethylene naphthalate, polycarbonate, polystyrene, polyethylene, polypropylene, polyphenylene sulfide, polyvinylidene fluoride, tetraacetylcellulose, brominatedphenoxy, an aramid class, a polyimide class, a polystyrene class, a polyarylate class, a polysulfone class, a polyolefin class, or the like. Although of them, the substrate having a high transmittance in a visible light range is especially, preferably used, the present invention is by no means limited thereto. In addition, a thickness of the transparent substrate is not especially limited, and thus can be freely selected depending on the transmittance of the light, the barrier property between the inside and the outside of the dye-sensitized solar cell, and the like.

A surface resistance (sheet resistance) of the transparent conductive substrate is preferable as the surface resistance thereof is set as being lower. Specifically, the surface resistance of the transparent conductive layer is preferably equal to or lower than 500 Ω/□, and is more preferably equal to or lower than 100 Ω/□. When the transparent conductive layer is formed on the transparent substrate, the conventionally known material can be used as a material for the transparent conductive layer. Specifically, although there are given an indium-tin composite oxide (ITO), fluorine-doped SnO₂ (FTO), antimony-doped SnO₂ (ATO), SnO₂, ZnO, indium-zinc composite oxide (IZO), and the like, the present invention is by no means limited thereto. Also, a material obtained by combining two or more kinds of materials described above with one another can also be used.

Although there is especially no limit to a method of forming the porous titanium oxide layer made of the titanium oxide fine particles, a wet film forming method is preferable when the physicality, the convenience, the manufacture cost, and the like are taken into consideration. Also, a method is preferable in which a paste obtained by uniformly dispersing powders or a sol of titanium oxide fine particles into a solvent such as water or an organic solvent is prepared and is then applied onto a transparent conductive substrate. There is especially no limit to a method for the application, and thus the application can be carried out in accordance with the known method. For example, the application can be carried out in accordance with a dip method, a spray method, a wire-bar method, a spin coat method, a roller coat method, a blade coat method, or a gravure coat method. In addition, the application can also be carried out in accordance with a wet printing method. Here, the wet printing method is typified by various kinds of methods such as anastatic printing, offset, gravure, intaglio printing, rubber plate printing, and screen printing. The anatase type titanium oxide may be commercially available powder, sol or slurry. Or, the anatase type titanium oxide having a predetermined particle diameter may also be made by utilizing a known method of, for example, hydrolyzing a titanium oxide alkoxide. When the commercially available powder is used, the secondary aggregation is preferably resolved. Also, in a phase of preparation of the application liquid, the particles are preferably dispersed by using a mortar, a ball mill, a ultrasonic dispersion device or the like. At this time, in order to prevent the particles resolved from the secondary aggregation from aggregating again, it is possible to add acetylacetone, a hydrochloric acid, a nitric acid, a surfactant agent, a chelate agent or the like. In addition, for thickening, it is possible to add various kinds of thickening agents such as a polymer molecule such as polyethylene oxide or polyvinyl alcohol, and a cellulose system thickening agent.

The porous titanium oxide layer made of the titanium oxide fine particles is preferably large in surface area thereof so as to be able to adsorb many sensitizing dyes. For this reason, a surface area in a state of forming the porous titanium oxide layer on the transparent conductive substrate is preferably 10 or more times as large as that of a projected area, and is more preferably 100 or more times as large as that of the projected area. Although there is especially no limit to an upper limit of the surface area, the surface area is normally about 1,000 times as large as that of the projected area. In general, a rate of capturing a light becomes high because an amount of dyes supported per unit projected area increases as the thickness of the porous titanium oxide layer further increases. However, a loss due to a recombination of the electric charges injected also increases because a diffusion distance of each of the electrons injected increases. Therefore, although a preferred thickness exists in the porous titanium oxide layer, the preferred thickness is generally in the range of 0.1 to 100 µm, is more preferably equal to or smaller than 50 µm, for example, in the range of 1 to 50 µm, and is especially, preferably in the range of 3 to 30 µm. For example, it is preferable that after a paste having the titanium oxide fine particles dispersed therein is applied onto the transparent conductive substrate, burning is carried out for the purpose of causing the titanium oxide fine particles to electrically contact each other, or enhancing a strength of the porous titanium oxide layer, and enhancing adhesive to the transparent conductive substrate. Although there is especially no limit to the range of a burning temperature, the burning temperature is normally in the range of 450 to 700°C, and is more preferably in the range of 450 to 650°C because when the burning temperature is made to rise too much, a resistance of the transparent conductive substrate increases, and the transparent conductive substrate may be melt. In addition, although there is especially no limit to a burning time, the burning time is normally in the range of about 10 minutes to about 10 hours. For the purpose of increasing a surface area of the porous titanium oxide layer, and enhancing necking between the titanium oxide fine particles after the burning, for example, there may be carried out chemical plating using a titanium tetrachloride solution, a necking treatment using a titanium trichloride solution, a dip treatment for the titanium oxide superfine particle sol having a diameter of 10 µm or less, or the like. When a plastic substrate is used as a supporting body for the transparent conductive substrate, it is also possible that a paste containing therein a binder is applied to the transparent conductive substrate, and is then pressure-bonded to the transparent conductive substrate through hot press.

The sensitizing dye supported by the porous titanium oxide layer is not especially limited as long as it exhibits a sensitizing operation. However, the sensitizing dye having an acid functional group adsorbed to the porous titanium oxide layer is preferable. Specifically, the sensitizing dye having a carboxy group or a phosphoric acid group is preferable. Of them, the sensitizing dye having the carboxy group is preferable. Giving examples of the sensitizing dye, for example, there is given a xanthene system dye such as Rhodamine B, rose bengal, eosin or erythrocin, a cyanine system dye such as merocyanine, quinocyanine or cryptcyanine, a basic dye such as phenosafranine, Cabri Blue, thiocin or Methylene Blue, or a porphyrin system compound such as chlorophyll, zinc porphyrin, or magnesium porphyrin. With regard to other dyes, there are given an azo dye, a phthalocyanine compound, a coumalin system compound, a bipyridine complex compound, an anthraquinone system dye, a polycyclic quinone system dye, and the like. Of them, the dye which has a ligand containing therein a pyridine ring or an imidazolium ring, and which is made of at least one kind of metal complex selected from the group consisting of Ru, Os, Ir, Pt, Co, Fe, and Cu is preferable because it has a high quantum yield. In particular, a dye molecule having a cis-bis (isothiocyanate)-N, N-bis (2,2'-dipyridyl-4,4'-dicarboxylic acid)-ruthenium (II) or Tris (isothiocyanate)-ruthenium (II)-2,2': 6',2"-terpyridine-4,4',4"-tricarboxylic acid as a basic skeleton is preferable because it has a wide adsorption wavelength band. However, the sensitizing dye is by no means limited thereto, and thus two or more kinds of sensitizing dyes described above may be mixed with one another.

A method of adsorbing the sensitizing dye to the porous titanium oxide layer is not especially limited. However, the sensitizing dyes described above can be dissolved in a solvent such as an alcohol class, a nitryle class, nitromethane, hydrocarbon halide, an ether class, dimethyl sulfoxide, an amide class, N-methylpyrrolidone, 1,3-dimethylimidazolidinone, 3-methyloxazolidinone, an ester class, a carbonate class, a ketone class, hydrocarbon, and water. Also, the porous titanium oxide layer can be immersed in the solvent described above, or the dye solution can be applied onto the porous titanium oxide layer. In addition, a deoxycholic acid or the like may be added for the purpose of reducing association between the sensitizing dye molecules. In addition, an ultraviolet absorbing agent can be used in combination as may be necessary.

After the sensitizing dye is adsorbed, a surface of the porous titanium oxide layer may be processed by using an amine class for the purpose of promoting the removal of the excessively adsorbed sensitizing dye. Pyridine, 4-tert-butylpyridine, polyvinylpyridine or the like is given as an example of the amine class. When such an amine class is a liquid, it may be used as it is, or may be dissolved in an organic solvent to be used.

In addition to a combination of iodine (I₂) and a metal iodide or an organic iodide, or a combination of bromine (Br₂) and a metal bromide or an organic bromide, a metal complex such as a ferrocyanic acid chloride/ferricyanic acid chloride, or ferrocene/ferricinium ion, a sulfur compound such as sodium polysulfide, or alkyl thiol/alkyl disulfide, or a viologen dye, hydroquinone/quinone, or the like can be used as the electrolyte. Li, Na, K, Mg, Ca, Cs or the like is preferable as a cation of the metal compound described above, and a quaternary ammonium compound such as a tetraalkyl ammonium class, a pyridinium class or an imidazolium class is preferable as a cation of the organic compound described above. However, the present invention is by no means limited thereto. In addition, a material obtained by mixing two or more kinds of materials described above can also be used. Of them, the electrolyte obtained by combining I₂, and LiI, NaI or the quaternary ammonium compound such as imidazoliumiodide with each other is preferable. A concentration of an electrolyte salt is preferably in the range of 0.05 to 10 M for a solvent, is more preferably in the range of 0.05 to 5 M for the solvent, and is further more preferably in the range of 0.2 to 3 M for the solvent. A concentration of I₂ or Br₂ is preferably in the range of 0.0005 to 1 M, is more preferably in the range of 0.001 to 0.5 M, and is further more preferably in the range of 0.001 to 0.3 M. In addition, various kinds of addition agents such as 4-tert-butylpyridine or a benzimidazolium class may be added for the purpose of enhancing an open voltage of the dye-sensitized solar cell.

Water, an alcohol class, an eter class, an ester class, a carbonate class, a lactone class, a carboxylate class, a triester phosphate class, a heterocyclic compound class, a nitryl class, a keton class, an amide class, nitromethane, hydrocarbon halide, dimethyl sulfoxide, sulfolane, N-methylpyrrolidone, 1,3-dimethyl imidazolidinone, 3-methyloxazolidinone, hydrocarbon, or the like is given as the solvent composing the electrolyte composition described above. However, the present invention is by no means limited thereto, and thus a material obtained by mixing two or more kinds of materials described above can also be used. Moreover, an ion liquid of a tetraalkyl system, a pyridinium system, or an imidazolium system quaternary ammonium salt can also be used as the solvent.

For the purpose of reducing liquid leakage of the dye-sensitized solar cell, and volatilization of the electrolyte of the dye-sensitized solar cell, a gelatinizing agent, polymer, cross-linked monomer, or the like can be dissolved in the electrolyte composition described above, and in addition thereto, inorganic ceramic particles can be dispersed into the electrolyte composition. Thus, the resulting material can also be used as a gel-like electrolyte. With regard to a ratio between a gel matrix and the electrolyte composition, when an amount of electrolyte composition is much, an ion conductivity increases, but a mechanical strength decreases. Conversely, when the amount of electrolyte composition is too less, the mechanical strength is large, but the ion conductivity decreases. Therefore, the electrolyte composition is desirably in the range of 50 to 99 wt% of the gel-like electrolyte, and is more preferably in the range of 80 to 97 wt%. In addition, the electrolyte described above and a plasticizer are both dissolved in a polymer, and the plasticizer is volatilized to be removed, thereby making it also possible to realize a total solid type dye-sensitized solar cell.

An arbitrary substance can be used for the counter electrode as long as it is a conductive substance. However, an insulating substance can also be used for the counter electrode as long as a conductive catalytic layer is installed on a side facing the porous titanium oxide layer. However, a material which is electrochemically stable is preferably used as the material for the counter electrode. Specifically, platinum, gold, carbon, a conductive polymer or the like is desirably used. In addition, for the purpose of enhancing the catalyst effect for the oxidation-reduction, preferably, the side facing the porous titanium oxide layer has a fine structure so as to increase the surface area. For example, it is desirable that in the case of platinum, a platinum black state is obtained, and in the case of carbon, the porous state is obtained. The platinum black state can be formed by an anode oxidation method for platinum, reduction processing for a platinum compound, or the like. Also, carbon in the porous state can be formed by a method such as sintering of carbon fine particles, burning of an organic polymer, or the like. In addition, a metal, such as platinum having a high oxidation-reduction catalytic effect is wired on a transparent conductive substrate, or reduction processing of a platinum compound is carried out for a surface of the transparent conductive substrate, whereby the resulting transparent conductive substrate can be used as the transparent counter electrode.

Although a method of manufacturing the dye-sensitized solar cell is not especially limited, for example, in the case where a liquiform electrolyte composition can be used, or an electrolyte composition can turn into a gel in the inside of the dye-sensitized solar cell and the electrolyte composition is liquiform before introduction, the porous titanium oxide layer(s) and the counter electrode are made to face each other, and a substrate portion having no porous titanium oxide layer(s) formed thereon is sealed so as for these electrodes not to contact each other. At this time, although a size of a gap defined between the porous titanium oxide layer(s) and the counter electrode is not especially limited, the size of the gap defined therebetween is normally, preferably in the range of 1 to 100 µm, and is more preferably in the range of 1 to 50 µm. When a distance between those electrodes is too long, a photocurrent is reduced due to reduction of an electric conductivity. Although a sealing method is not especially limited, a material having a light resistance, an insulating property, and a moisture-proof property is preferably used. Thus, it is possible to use an epoxy resin, an ultraviolet curable resin, an acrylic resin, a polyisobutylene resin, EVA (ethylene vinyl acetate), an ionomer resin, ceramics, various kinds of thermal fusion bonding films, and the like. In addition, it is possible to use various kinds of welding methods. In addition, when a liquid solution of the electrolyte composition is filled, an inlet is required. However, a place of the inlet is not especially limited unless the place of the inlet is any of a place on the porous titanium oxide layer(s) and a place on the counter electrode facing the porous titanium oxide layer(s). In addition, although a method of filling the liquid solution of the electrolyte composition is not especially limited, there is preferable a method in which an outer periphery is sealed in advance, and the liquid solution of the electrolyte composition is filled into the inside of the dye-sensitized solar cell having the inlet for the liquid solution opened therein under a reduced pressure. In this case, a method is convenient in which a few drops of the liquid solution is dropped onto the inlet, and is filled in the inlet in accordance with the capillary action. In addition, the handling of the filling of the liquid solution can also be carried out under either the reduced pressure or the heating as may be necessary. After the liquid solution is perfectly filled, the liquid solution left on the inlet is removed, and the inlet is then sealed. Although the sealing method is also not especially limited, the sealing can also be carried out by sticking either a glass substrate or a plastic substrate through a sealing material as may be necessary. In addition to this method, as with a One Drop Filling (ODF) process for a liquid crystal panel, a drop of an electrolyte liquid can also be dropped on a substrate, and the sticking can also be carried out under a reduced pressure to carry out the sealing. In addition, in the case of either a gelled electrolyte using a polymer or the like or a total solid type electrolyte, a polymer liquid solution containing therein an electrolyte composition and a plasticizing agent is volatized on the porous titanium oxide layer(s) to be removed by a casting method. After the plasticizing agent is perfectly removed, the sealing is carried out similarly to the case of the method described above. The sealing is preferably carried out either in an inactive gas atmosphere or under a reduced pressure by using a vacuum sealer or the like. After the sealing is carried out, for the purpose of sufficiently impregnating the electrolyte in the porous titanium oxide layer(s), an operation for heating and pressurization can also be carried out as may be necessary.

By the way, as described above, the various kinds of additives such as 4-tert-butylpyridine and the benzimidazolium class are added in some cases for the purpose of enhancing the open voltage of the dye-sensitized solar cell. In this case, however, the reduction of the short-circuit current is caused, which results in that it is difficult to largely increase the photoelectric conversion efficiency calculated in the form of current × voltage × fill factor. For this reason, an additive is desired with which the open voltage can be enhanced without causing the reduction of the short-circuit current. The inventors of the present invention carried out earnestly the research, and as a result, found out that the open voltage can be enhanced without causing the reduction of the short-circuit current in the dye-sensitized solar cell by using a compound having at least one or more isocyanate groups (-NCO) as an additive which is added to the electrolyte. That is to say, the electrolyte layer is preferably composed of an electrolyte composition containing therein the compound having at least one or more isocyanate groups. This electrolyte composition typically contains therein iodine. Although there is especially no limit to the compound containing therein at least one or more isocyanate groups, the compound is preferably compatible with a solvent of an electrolyte, an electrolyte salt, and other addition agents. The compound having at least one or more isocyanate groups suitably contains at least one nitrogen containing functional group in the same molecule in addition to the isocyanate group. Or, the electrolyte compound suitably further contains therein a compound containing at least one or more nitrogen containing functional groups in addition to this compound. Although the compound containing at least one or more nitrogen containing functional groups is suitably an amine system compound, the present invention is by no means limited thereto. Although there is especially no limit to the amine system compound, the amine system compound is preferably compatible with a solvent of an electrolyte, an electrolyte salt, and other addition agents. The nitrogen containing functional group is made to exist together with the compound having at least one or more isocyanate groups in such a manner, which especially, largely contributes to an increase in open voltage of the dye-sensitized solar cell. Specifically, the compound having at least one or more isocyanate groups, for example, is phenyl isocyanate, 2-chloroethyl isocyanate, m-chlorophenyl isocyanate, cychohexyl isocyanate, o-tolyl isocyanate, p-tolyl isocyanate, n-hexyl isocyanate, tolylene-2,4-diisocyanate, haxamethylene diisocyanate, methylenediphenyl-4,4'-diisocyanate or the like. However, the present invention is by no means limited thereto. In addition, specifically, the amine system compound, for example, is 4-tert-butylpyridine, aniline, N,N-dimethylanilene, N-methylbenz imidazole, or the like. However, the present invention is by no means limited thereto.

According to the second invention, there is provided a method of manufacturing a dye-sensitized solar cell, having:
the process for screen-printing a paste having titanium oxide fine particles dispersed therein either in the same pattern or in different patterns either one time or multiple times on a transparent conductive substrate;
the process for burning the paste, thereby forming one or multiple porous titanium oxide layers;
the process for causing the one or multiple porous titanium oxide layers to support a sensitizing dye(s);
the process for providing a counter electrode so as to face the one or multiple porous titanium oxide layers; and
the process for providing an electrolyte layer between the one or multiple porous titanium oxide layers and the counter electrode,
in which the one or multiple porous titanium oxide layers are formed so as to display a predetermined color(s), and compose a predetermined pattern(s) in accordance with selection of a thickness, a lamination structure, a particle diameter of the titanium oxide fine particles, or a combination ratio of two or more kinds of titanium oxide fine particles when the titanium oxide fine particles are composed of the two or more kinds of titanium oxide fine particles different in particle diameter from one another.

In order that the one or multiple porous titanium oxide layers may display the predetermined color(s) in accordance with the selection of the thickness, the lamination structure, the particle diameter of the titanium oxide fine particles, or the combination ratio of the two or more kinds of titanium oxide fine particles when the titanium oxide fine particles are composed of the two or more kinds of titanium oxide fine particles different in particle diameter from one another, there are selected a thickness of the paste which is screen-printed, the number of times of the screen printing with which the paste is screen-printed in the same pattern, a kind of paste which is screen-printed multiple times in the same pattern (the particle diameter of the titanium oxide fine particles, the combination ratio of the two or more kinds of titanium oxide fine particles when the two or more kinds of titanium oxide fine particles different in particle diameter from each other are used, and the like), and the like.

In the second invention, with regard to any of the matters other than the foregoing, the matter described in connection with the first invention is established.

According to the third invention, there is provided a dye-sensitized solar cell, having:
a transparent conductive substrate;
one or multiple porous semiconductor layers, on the transparent conductive substrate, made of semiconductor fine particles and supporting a sensitizing dye(s);
a counter electrode provided so as to face the one or multiple porous semiconductor layers; and
an electrolyte layer between the one or multiple porous semiconductor layers and the counter electrode,
in which the one or multiple porous semiconductor layers are formed so as to display a predetermined color(s) and compose a predetermined pattern(s) in accordance with selection of a thickness, a lamination structure, particle diameters of the semiconductor fine particles, or a combination ratio of two or more kinds of semiconductor fine particles when the semiconductor fine particles are composed of the two or more kinds of semiconductor fine particles different in particle diameter from one another.

According to the fourth invention, there is provided a method of manufacturing a dye-sensitized solar cell, having:
the process for screen-printing a paste having semiconductor fine particles disposed therein either in the same pattern or in different patterns either one time or multiple times on a transparent conductive substrate;
the process for burning the paste, thereby forming one or multiple porous semiconductor layers;
the process for causing the one or multiple porous semiconductor layers to support a sensitizing dye(s);
the process for providing a counter electrode so as to face the one or multiple porous semiconductor layers; and
the process for providing an electrolyte layer between the one or multiple porous semiconductor layers and the counter electrode,
in which the one or multiple porous semiconductor layers are formed so as to display a predetermined color(s) and compose a predetermined pattern(s) in accordance with selection of a thickness, a lamination structure, particle diameters of the semiconductor fine particles, or a combination ratio of two or more kinds of semiconductor fine particles when the semiconductor fine particles are composed of the two or more kinds of semiconductor fine particles different in particle diameter from one another.

In the third and fourth inventions, in addition to element semiconductors typified by silicon, various kinds of compound semiconductor(s), a compound having a perovskite structure, or the like can be used as a material for the semiconductor fine particles composing the one or multiple porous semiconductor layers. Each of these semiconductors is preferably an n-type semiconductor in which electrons in a conduction band become current carriers under photoexitation to give an anode current. Concretely exemplifying, these semiconductors are a titanium oxide (TiO₂), a zinc oxide (ZnO), a tungsten oxide (WO₃), a niobium oxide (Nb₂O₅) , a strontium titanate (TiSrO₃), a tin oxide (SnO₂), and the like. Of them, an anatase-type titanium oxide is especially preferable. The kinds of semiconductors are by no means limited thereto, and thus a semiconductor material obtained by mixing two or more kinds of semiconductors described above can also be used. Moreover, the semiconductor fine particle can take various kinds of forms such as a particle-shaped form, a tube-shaped form, and a rod-shaped form as may be necessary.

In the third and fourth inventions, with regard to any of the matters other than the forgoing, the matter described in accordance with the first and second inventions is established.

In the present invention constituted in the manner described above, the porous titanium oxide layer(s) or the porous semiconductor layer(s) can be made to display the predetermined color(s) in accordance with the selection of the thickness and lamination structure of the porous titanium oxide layer(s) or the porous semiconductor layer(s), the particle diameter of the titanium oxide fine particles or the semiconductor fine particles, or the combination ratio of the two or more kinds of titanium oxide fine particles or semiconductor fine particles when the titanium oxide fine particles or the semiconductor fine particles are composed of the two or more kinds of titanium oxide fine particles or semiconductor fine particles different in particle diameter from one another. In addition, the predetermined pattern(s) can be composed in accordance with the shape(s) and disposition(s) of the pattern(s) of the porous titanium oxide layer(s) or the porous semiconductor layer(s). That is to say, in the present invention, the predetermined stained pattern(s) can be displayed by the porous titanium oxide layer(s) or the porous semiconductor layer(s).

### Advantageous Effect

According to the present invention, it is possible to realize the dye-sensitized solar cell which is superior in the design property because the high photoelectric conversion efficiency can be obtained in the dye-sensitized solar cell, and the dye-sensitized solar cell can be manufactured at the low cost similarly to the case of the conventionally known dye-sensitized solar cell, and also the dye-sensitized solar cell can display the predetermined colored pattern(s).

### Brief Description of Drawings

[FIG. 1]

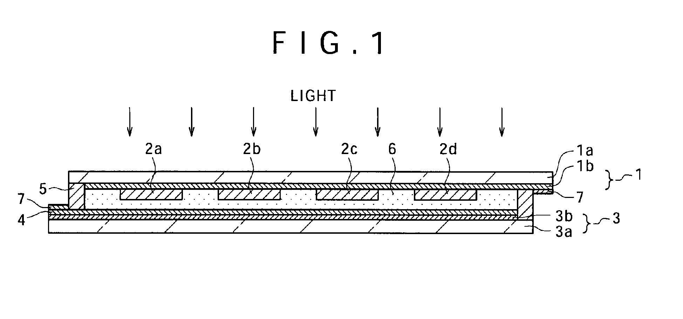

   FIG. 1 is a cross sectional view of a dye-sensitized solar cell according to a first embodiment of the present invention.
[FIG. 2]

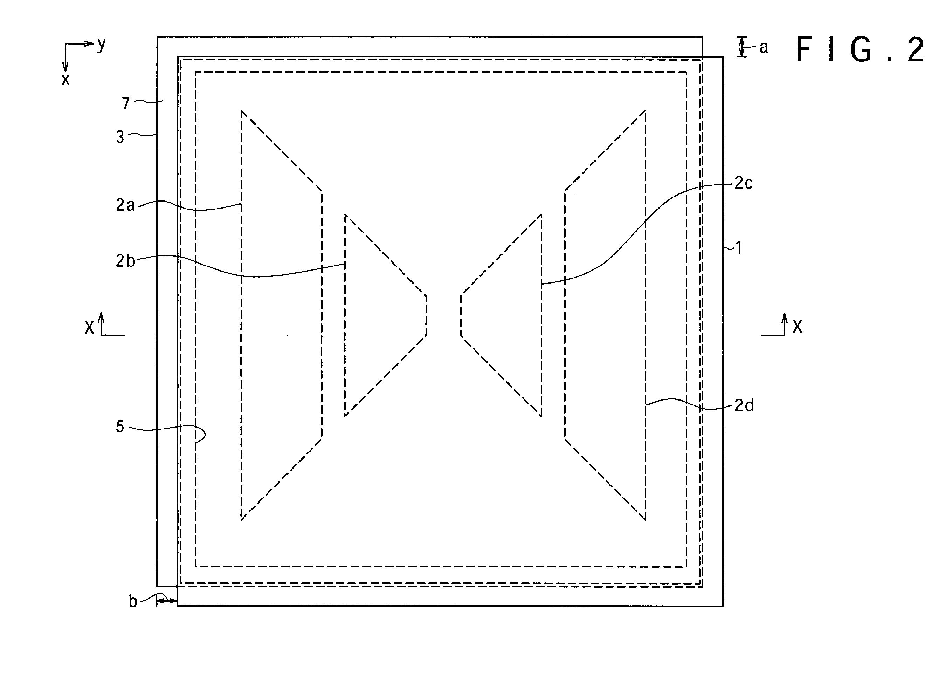

   FIG. 2 is a top plan view of the dye-sensitized solar cell according to the first embodiment of the present invention.
[FIG. 3]

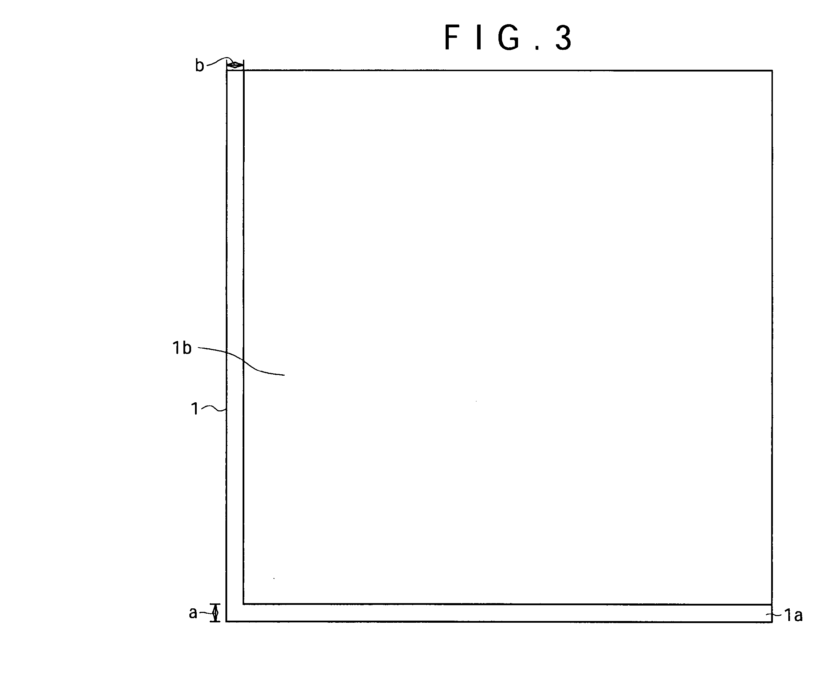

   FIG. 3 is a top plan view of a transparent conductive substrate in which dye-sensitized porous titanium oxide layers of the dye-sensitized solar cell according to the first embodiment of the present invention are formed when viewed from a transparent conductive layer side.
[FIG. 4]

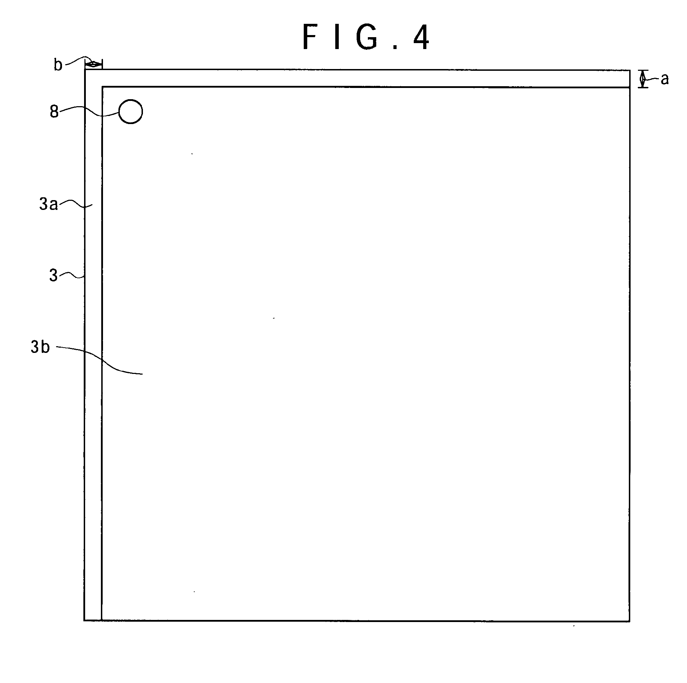

   FIG. 4 is a top plan view of the transparent conductive substrate in which a counter electrode of the dye-sensitized solar cell according to the first embodiment of the present invention is formed when viewed from the transparent conductive layer side.
[FIG. 5]

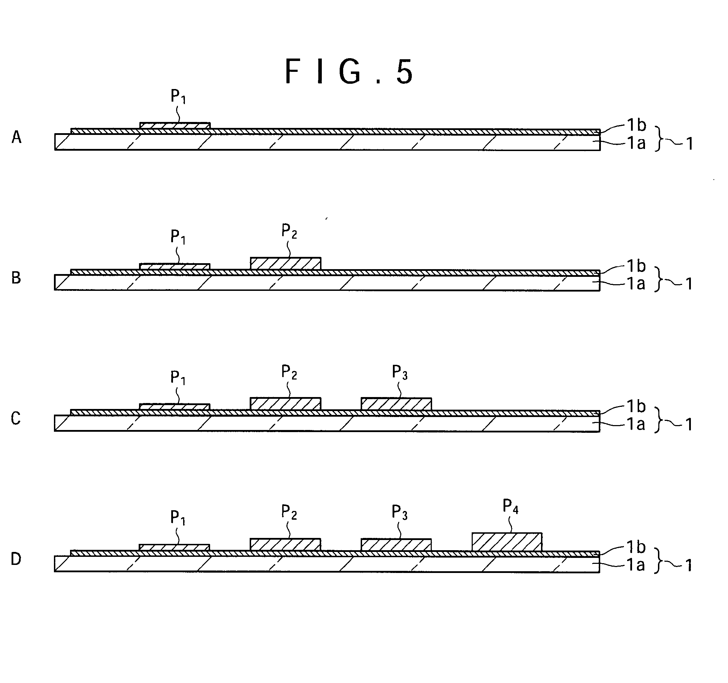

   FIG. 5 is a cross sectional view showing a method of manufacturing the dye-sensitized solar cell according to the first embodiment of the present invention.
[FIG. 6]

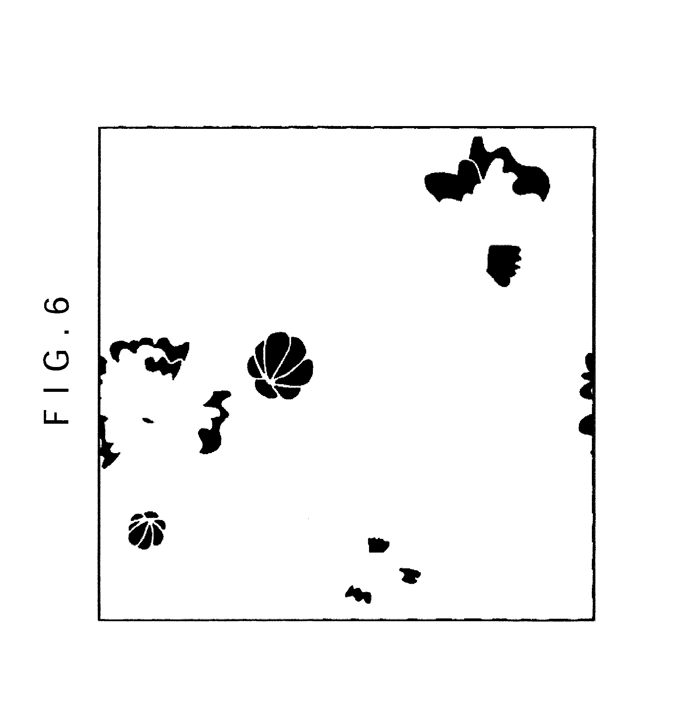

   FIG. 6 is a top plan view showing a screen which is used when a dye-sensitized porous titanium oxide layer is formed by screen printing in a method of manufacturing a dye-sensitized solar cell according to Example 1 of the present invention.
[FIG. 7]

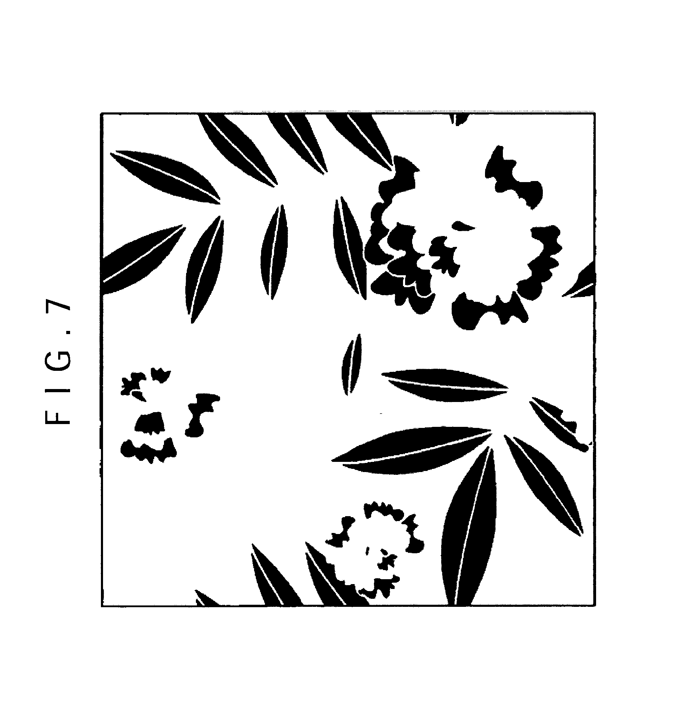

   FIG. 7 is a top plan view showing a screen which is used when a dye-sensitized porous titanium oxide layer is formed by the screen printing in a method of manufacturing the dye-sensitized solar cell according to Example 1 of the present invention.
[FIG. 8]

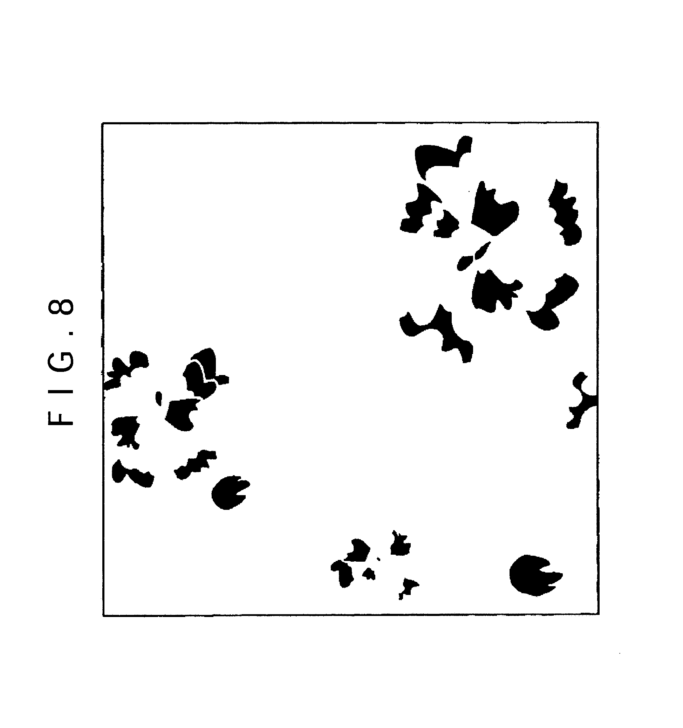

   FIG. 8 is a top plan view showing a screen which is used when a dye-sensitized porous titanium oxide layer is formed by the screen printing in a method of manufacturing the dye-sensitized solar cell according to Example 1 of the present invention.
[FIG. 9]

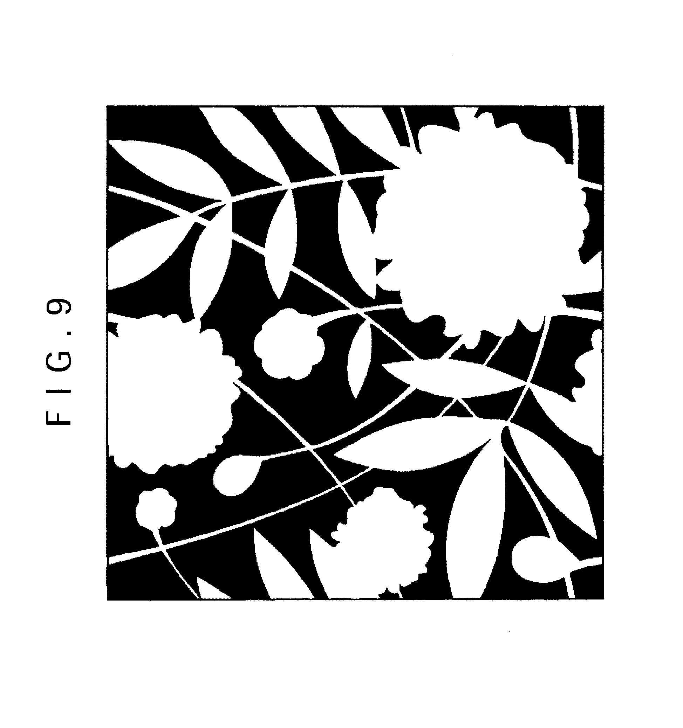

   FIG. 9 is a top plan view showing a screen which is used when a dye-sensitized porous titanium oxide layer is formed by the screen printing in a method of manufacturing the dye-sensitized solar cell according to Example 1 of the present invention.
[FIG. 10]

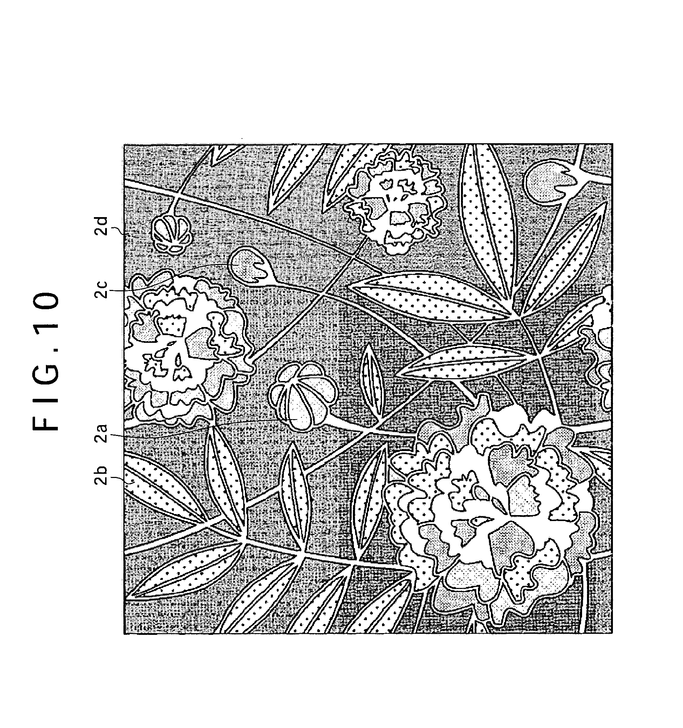

   FIG. 10 is a top plan view when a dye-sensitized solar cell manufactured in accordance with the method of manufacturing the dye-sensitized solar cell according to Example 1 of the present invention is viewed from a light receiving surface side.
[FIG. 11]

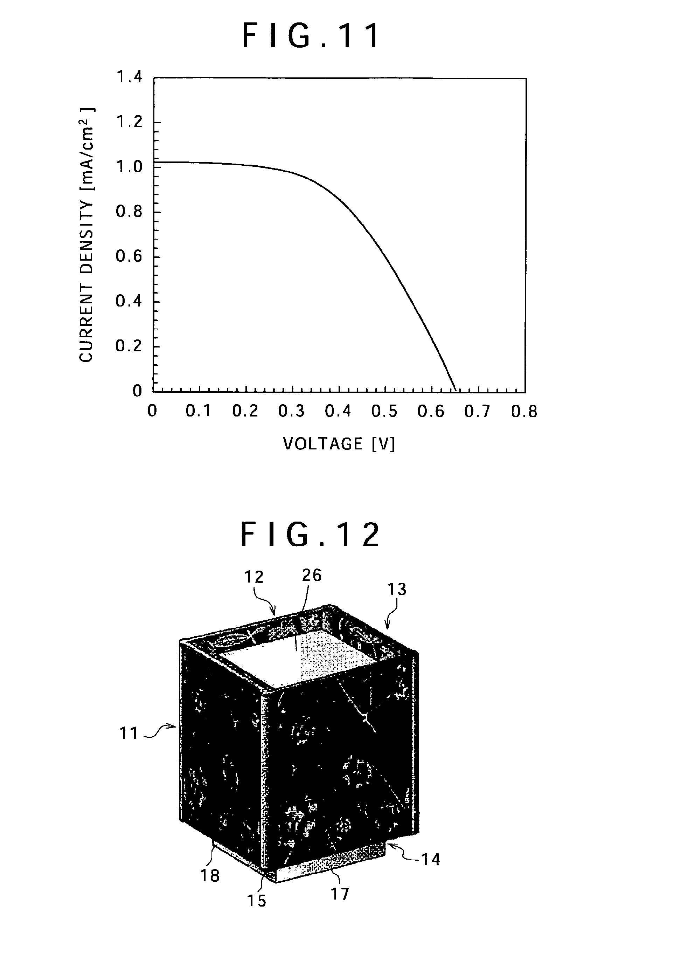

   FIG. 11 is a schematic diagram showing current-voltage characteristics of the dye-sensitized solar cell manufactured in accordance with the method of manufacturing the dye-sensitized solar cell according to Example 1 of the present invention.
[FIG. 12]
   FIG. 12 is a schematic diagram showing a paper-covered night light type dye-sensitized solar cell according to a third embodiment of the present invention.
[FIG. 13]

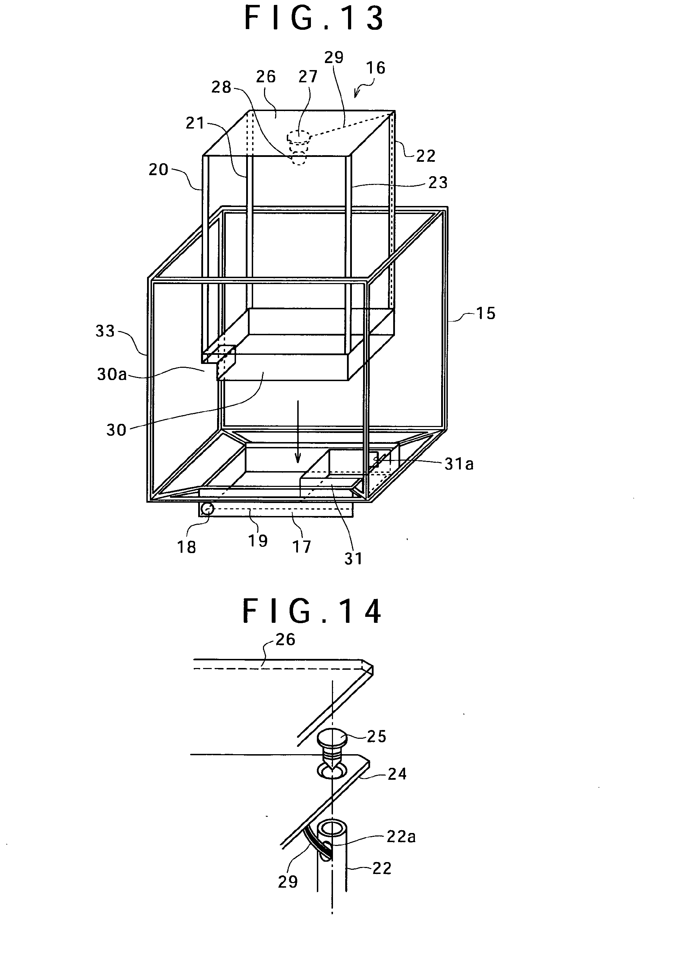

   FIG. 13 is an exploded perspective view of the paper-covered night light type dye-sensitized solar cell according to the third embodiment of the present invention.
[FIG. 14]
   FIG. 14 is an exploded perspective view showing a part of an inner box of the paper-covered night light type dye-sensitized solar cell according to the third embodiment of the present invention.
[FIG. 15]

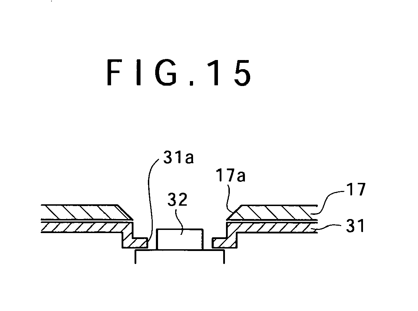

   FIG. 15 is an enlarged schematic diagram showing a switch provided in the paper-covered night light type dye-sensitized solar cell according to the third embodiment of the present invention, and portions of an electric battery box and a base which are provide in the vicinity of the switch.

### Mode for Carrying Out the Invention

Hereinafter, embodiments of the present invention will be described with reference to the drawings. It is noted that in the embodiments which will be described below, the same or corresponding portions are designated by the same reference numerals, respectively.

FIG. 1 is a cross sectional view of a dye-sensitized solar cell according to a first embodiment of the present invention. A top plan view of the dye-sensitized solar cell is shown in FIG. 2. FIG. 1 corresponds to a cross sectional view taken on line X-X of FIG. 2.

As shown in FIG. 1 and FIG. 2, in the dye-sensitized solar cell, a plurality of dye supporting porous titanium oxide layers having predetermined patterns, respectively, are formed on a transparent conductive layer 1b of a transparent conductive substrate 1 in which a transparent conductive layer 1b is formed on a transparent substrate 1a. The number of dye supporting porous titanium oxide layers, and shapes and dispositions of the dye supporting porous titanium oxide layers are determined in accordance with a pattern which is displayed on a light receiving surface of the dye-sensitized solar cell. It is supposed in this case that four dye supporting porous titanium oxide layers 2a to 2d are formed as an example. The shapes and dispositions of the dye supporting porous titanium oxide layers 2a to 2d are merely schematically shown as an example, and thus are not especially limited. On the other hand, a counter electrode 4 is formed on a transparent conductive layer 3b of a transparent conductive substrate 3 in which the transparent conductive layer 3b is formed on a transparent substrate 3a. Also, outer peripheral portions of regions, of a member having the dye supporting porous titanium oxide layers 2a to 2d formed on the transparent conductive substrate 1, and a member having the counter electrode 4 formed on the transparent conductive substrate 3, which are held between the transparent conductive substrate 1 and the transparent conductive substrate 3 are bonded to each other and are sealed with a seal material 5 in a state in which each of the dye supporting porous titanium oxide layers 2a to 2d, and the counter electrode 4 face at a predetermined distance each other. The distance between each of the dye supporting porous titanium oxide layers 2a to 2d, and the counter electrode 4, for example, is in the range of 1 to 100 µm, is typically in the range of several tens of micron meters to 100 µm, and is preferably in the range of 1 to 50 µm. A space surrounded by the transparent conductive layer 1b having the dye supporting porous titanium oxide layers 2a to 2d formed thereon, the counter electrode 4, and the seal material 5 is enclosed with an electrolyte layer 6. In this case, a surface opposite to a surface, of the transparent conductive substrate 1, having the dye supporting porous titanium oxide layers 2a to 2d formed thereon becomes a light receiving surface.

The transparent conductive substrate 1 in which the transparent conductive layer 1b is formed on the transparent substrate 1a, the transparent conductive substrate 3 in which the transparent conductive layer 3b is formed on the transparent substrate 3a, the counter electrode 4, the seal material 5, and the electrolyte layer 6 can be selected from those which are previously given as may be necessary.

The transparent conductive substrates 1 and 3 have square or rectangular planar shapes identical to each other. In this case, as shown in FIG. 1 and FIG. 2, when an x-axis and a y-axis are taken in directions parallel with two sides, respectively, of each of the transparent conductive substrates 1 and 3, which are made at a right angle with each other, the transparent conductive substrates 1 and 3 are shifted from each other by a in the x-axis direction, and b in the y-axis direction. For example, when the transparent conductive substrates 1 and 3 have the same square planar shape, the transparent conductive substrates 1 and 3 are shifted from each other in a direction of one diagonal. At this time, a = b. Power collecting layers 7 are formed on the transparent conductive layers 1b and 3b, of the transparent conductive substrates 1 and 3, located outside the seal material 5, respectively. The power collecting layers 7 are used when connection to an external lead is carried out or when the dye-sensitized solar cells are connected to each other.

A surface of the transparent conductive substrate 1 on the transparent conductive layer 1b side is shown in FIG. 3. As shown in FIG. 3, a portion of an elongate area, in the transparent conductive layer 1b, having widths a and b extending from the two sides of the transparent conductive substrate 1 which are made at a right angle with each other is removed, and thus the transparent substrate 1a is exposed from this portion. Also, portions of the seal material 5 extending along those two sides of the transparent conductive substrate 1, respectively, are bonded onto the exposed portion of the transparent substrate 1a (refer to FIG. 1). A surface of the transparent conductive substrate 3 on the transparent conductive layer 3b side is shown in FIG. 4. As shown in FIG. 4, a portion of an elongate area, in the transparent conductive layer 3b, having widths a and b extending from two sides of the transparent conductive substrate 3 which are made at a right angle with each other is removed, and thus the transparent substrate 3a is exposed from this portion. Also, portions of the seal material 5 extending along those two sides of the transparent conductive substrate 3, respectively, are bonded onto the exposed portion of the transparent substrate 3a (refer to FIG. 1). Although an illustration is omitted in FIG. 4, the counter electrode 4 also has the same planar shape as that of the transparent conductive layer 3b (refer to FIG. 1). An inlet 8 which is used for filling of the electrolyte layer 6 and will be finally caulked is provided in one counter portion of the transparent conductive substrate 3.

The dye supporting porous titanium oxide layers 2a to 2d are formed so as to display predetermined colors, respectively, in accordance with selection of a thickness, a lamination structure, a particle diameter of the titanium oxide fine particles or a combination ratio of two or more kinds of titanium oxide fine particles when the titanium oxide fine particles are composed of the two or more kinds of titanium oxide fine particles different in particle diameter from one another according to colors with which a pattern to be displayed on the light receiving surface of the dye-sensitized solar cell is stained.

For example, when the pattern to be displayed on the light receiving surface is set as a green system colored pattern, the dye supporting porous titanium oxide layers 2a to 2d are made to have any of the following structures (1) to (4), thereby allowing the dye supporting porous titanium oxide layers 2a to 2d to display any of four kinds of green system colors.

### (1) Light green (clear color)

A porous titanium oxide layer having a thickness of 3 µm and made of titanium oxide fine particles having a particle diameter of about 20 nm

### (2) Green slightly deeper than the color (1) (clear color)

A porous titanium oxide layer having a thickness of 6 µm and made of titanium oxide fine particles having a particle diameter of about 20 nm

### (3) Green deeper than the color (2) (not clear color)

A lamination structure composed of a porous titanium oxide layer having a thickness of 3 µm and made of titanium oxide fine particles having a particle diameter of about 20 nm, and a porous titanium oxide layer lying the above porous titanium oxide layer, having a thickness of 3 µm and made of titanium oxide fine particles having a particle diameter of about 400 nm

### (4) Deep green (not clear color)

A porous titanium oxide layer having a thickness of 3 µm and made of titanium oxide fine particles having a particle diameter of about 20 nm, and a porous titanium oxide layer overlying the above porous titanium oxide layer, having a thickness of 6 µm, and made of titanium oxide fine particles having a particle diameter of about 20 nm and titanium oxide fine particles having a particle diameter of about 400 nm, and containing therein 20 wt% (combination ratio) titanium oxide fine particles having the particle diameter of 400 nm
Next, a description will be given with respect to a method of manufacturing the dye-sensitized solar cell.

Firstly, as shown in FIG. 3, the portion of the area, in the transparent conductive layer 1b, extending along the two sides of the transparent conductive substrate 1 which are made at a right angle with each other is removed, and thus the transparent substrate 1a is exposed from that portion.

Next, a paste having titanium oxide fine particles having a predetermined particle diameter, dispersed therein is applied onto the transparent conductive layer 1b of the transparent conductive substrate 1 predetermined times so as to have a predetermined thickness in accordance with pattern shapes of the dye supporting porous titanium oxide layers 2a to 2d to be formed, and the colors which the dye supporting porous titanium oxide layers 2a to 2d are to display, respectively.

When the color (1) described above is desired to be displayed, the paste in which the titanium oxide fine particles having the particle diameter of about 20 nm are dispersed is applied so as to have a thickness which will become 3 µm after burning which will be described later.

In addition, when the color (2) described above is desired to be displayed, the paste in which the titanium oxide fine particles having the particle diameter of about 20 nm are dispersed is applied so as to have a thickness which will become 6 µm after the burning which will be described later. In this case, the paste having a desired thickness either may be applied only one time or may be applied in twice.

In addition, when the color (3) described above is desired to be displayed, after the paste in which the titanium oxide fine particles having the particle diameter of about 20 nm are dispersed is applied to have a thickness which will become 3 µm after the burning which will be described later, a paste in which the titanium oxide fine particles having the particle diameter of about 400 nm are dispersed is applied onto that paste so as to have a thickness which will become 3 µm after the burning which will be described later.

In addition, when the color (4) described above is desired to be displayed, after the paste in which the titanium oxide fine particles having the particle diameter of about 20 nm are dispersed is applied to have a thickness which will become 3 µm after the burning which will be described later, a paste in which the titanium oxide fine particles having the particle diameter of about 20 nm, and the titanium oxide fine particles having the particle diameter of about 400 nm are dispersed at a ratio of containing 20 wt% titanium oxide fine particles having the particle diameter of about 400 nm is applied onto that paste so as to have a thickness which will become 6 µm after the burning which will be described later. In this case, the paste, having a desired thickness, in which the titanium oxide fine particles having the particle diameter of about 20 nm, and the titanium oxide fine particles having the particle diameter of about 400 nm are dispersed either may be applied only one time or may be applied in twice.

Although A to D of FIG. 5 show the case where pastes P₁ to P₄ corresponding to the dye supporting porous titanium oxide layers 2a to 2d, respectively, are applied in order as an example, the order of application of these pastes P₁ to P₄ is no object.

Next, the transparent conductive substrate 1 onto which the pastes P₁ to P₄ are applied in the predetermined patterns, respectively, in the manner as described above is burnt at a temperature of 450 to 650°C, for example, thereby sintering the titanium oxide fine particles.

Next, the transparent conductive substrate 1 in which the titanium oxide fine particles are sintered in such a manner, for example, is immersed in the dye liquid solution, thereby causing the titanium oxide fine particles to support the sensitizing dyes. In such a manner, the dye supporting porous titanium oxide layers 2a to 2d are formed.

On the other hand, as shown in FIG. 4, after the counter electrode 4 is formed on the transparent conductive layer 3b of the transparent conductive substrate 3, portions of the areas, in the counter electrode 4 and the transparent conductive layer 3b, extending along the two sides of the transparent conductive substrate 3 which are made at a right angle with each other are removed, and thus the transparent substrate 3a is exposed from these portions.

Next, the transparent conductive substrate 1 and the transparent conductive substrate 3 are disposed in such a way that each of the dye supporting porous titanium oxide layers 2a to 2d, and the counter electrode 4 face at a predetermined distance, for example, at a distance of 1 to 100 µm, preferably at a distance of 1 to 50 µm each other, and the transparent conductive substrate 1 and the transparent conductive substrate 3 are shifted from each other by a in the x-axis direction, and b in the y-axis direction. Also, a space which is to be enclosed with the electrolyte layer 6 is defined between the transparent conductive substrate 1 and the transparent conductive substrate 3 by the seal material 5, and the electrolyte layer 6 is filled in the space through the inlet 8 which, for example, is formed in the transparent conductive substrate 3 in advance. After that, the inlet 8 is caulked. As a result, the desired dye-sensitized solar cell is manufactured.

Next, a description will be given with respect to an operation of the dye-sensitized solar cell.

A light made incident to the light receiving surface of the transparent conductive substrate 1 is transmitted through the transparent conductive substrate 1 to be made incident to the dye supporting porous titanium oxide layers 2a to 2d in such a manner. The light made incident to the dye supporting porous titanium oxide layers 2a to 2d excites the sensitizing dyes of the dye supporting porous titanium oxide layers 2a to 2d to generate electrons. The electrons are speedily delivered from the sensitizing dyes to the titanium oxide fine particles of the dye supporting porous titanium oxide layers 2a to 2d. On the other hand, the sensitizing dyes which have lost the electrons receive electrons from ions in the electrolyte layer 6, and molecules which have delivered the electrons receive electrons again on the surface of the counter electrode 5. An electromotive force is generated between the transparent conductive substrate 1 electrically connected to each of the dye supporting porous titanium oxide layers 2a to 2d, and the transparent conductive substrate 3 in accordance with the series of reactions. The photoelectric conversion is carried out in the manner as described above.

In the dye-sensitized solar cell, in addition to the above basic function as the solar cell, the stained pattern based on the pattern shapes of the dye supporting porous titanium oxide layers 2a to 2d, and the colors which the dye supporting porous titanium oxide layers 2a to 2d display, respectively, can be viewed when the dye-sensitized solar cell is viewed from the outside.

As set forth hereinabove, according to the first embodiment, it is possible to realize the dye-sensitized solar cell which can obtain the high photoelectric conversion efficiency, and can be manufactured at the low cost similarly to the conventionally known dye-sensitized solar cell, and in addition thereto in which the desired stained patterns can be displayed by the dye supporting porous titanium oxide layers 2a to 2d, respectively, whereby a viewer can get a good feeling when the dye-sensitized solar cell is installed in the place which meets the eyes of the human being, and thus which is superior in the design property.

### <Example 1>

An FTO substrate (having a sheet resistance of 10 Ω/□) for an amorphous solar cell, made by Nippon Sheet Glass Co., Ltd., in which an FTO film was formed on a glass substrate having a thickness of 4 mm was processed into a square shape having a size of 206 mm × 206 mm, and ultrasonic cleaning was carried out by using acetone, alcohol, an alkali system cleaning liquid, and ultrapure water in order, and drying was sufficiently carried out. This FTO substrate is used as each of the transparent conductive substrates 1 and 3.

A portion of an area, having widths of a = b = 1.5 mm in the FTO film, extending along two sides of the FTO substrate as the transparent conductive substrate 1 which are made at a right angle with each other is removed by laser beam radiation (laser etching), and thus the glass substrate is exposed from this portion.

Next, a paste in which the titanium oxide fine particles having the particle diameter of about 20 nm are dispersed is screen-printed on the FTO film of the FTO substrate by using a screen having a pattern show in FIG. 6 so as to have a thickness which will become 3 µm after burning which will be described later. A pattern having a black color of the screen shown in FIG. 6 is the pattern to be printed. In addition, 325-mesh screen was used as this screen. Those also apply to screens shown in FIGS. 7 to 9, respectively. Here, the pattern of this screen is obtained by mirror-reversing the corresponding pattern in the pattern which is viewed when the light receiving surface of the dye-sensitized solar cell is viewed from the outside. This also applies to patterns of the screens shown in FIGS. 7 to 9, respectively.

Next, a paste in which the titanium oxide fine particles having the particle diameter of about 20 nm are dispersed is screen-printed on the FTO film of the FTO substrate by using a screen having a pattern shown in FIG. 7 so as to have a thickness which will become 3 µm after the burning which will be described later. Next, a paste in which the titanium oxide fine particles having the particle diameter of about 20 nm are dispersed similarly to the above case is screen-printed by using the same screen as that of the above case so as to have a thickness which will become 3 µm after the burning which will be described later.

Next, a paste in which the titanium oxide fine particles having the particle diameter of about 20 nm are dispersed is screen-printed on the FTO film of the FTO substrate by using a screen having a pattern shown in FIG. 8 so as to have a thickness which will become 3 µm after the burning. Next, a paste in which the titanium oxide fine particles having the particle diameter of about 400 nm are dispersed similarly to the above case is screen-printed by using the same screen so as to have a thickness which will become 3 µm after the burning.

Next, a paste in which the titanium oxide fine particles having the particle diameter of about 20 nm are dispersed is screen-printed on the FTO film of the FTO substrate by using a screen having a pattern shown in FIG. 9 so as to have a thickness which will become 3 µm after the burning which will be described later. Next, a paste in which the titanium oxide fine particles having the particle diameter of about 20 nm, and the titanium oxide fine particles having the particle diameter of about 400 nm are dispersed at a ratio of containing 20 wt% titanium oxide fine particles having the particle diameter of about 400 nm is screen-printed by using the same screen as that of the above case so as to have a thickness which will become 3 µm after the burning. Next, a paste in which the titanium oxide fine particles having the particle diameter of about 20 nm, and the titanium oxide fine particles having the particle diameter of about 400 nm are dispersed similarly to the above case at a ratio of containing 20 wt% titanium oxide fine particles having the particle diameter of about 400 nm is screen-printed by using the same screen as that of the above case so as to have a thickness which will become 3 µm after the burning.

Next, the FTO substrate on which the pastes are screen-printed in the predetermined pattern shapes, respectively, in the manner as described above is burnt in an electrical furnace at a temperature of 510°C for four hours to sinter the titanium oxide fine particles, thereby forming a titanium oxide fine particle sintered body.

Next, for the purpose of removing an impurity contained in the titanium oxide fine particle sintered body formed in such a manner, thereby enhancing the activity, ultraviolet exposure was carried out for three minutes by using an excimer lamp.

Next, after the titanium oxide fine particle sintered body was immersed in a tert-butyl alcohol/acetonitrile mixed medium (1 : 1 in volume) of 0.3 mM tris(isothiocyanate)-ruthenium(II)-2,2': 6',2"-terpyridine-4,4',4"-tricarboxylic acid-tritetra butyl ammonium salt (Black Dye) at a room temperature for 48 hours, thereby causing the titanium oxide fine particle sintered body to support the sensitizing dyes, the titanium oxide fine particle sintered body having the sensitizing dye thus supported thereon was cleaned by using acetonitrile, and was then dried in a dark place. The dye supporting porous titanium oxide layers 2a to 2d were formed in the manner as described above.

On the other hand, the inlet having a diameter of 0.5 mm is formed in one corner portion of the FTO substrate as the transparent conductive substrate 3. Next, after an ethanol liquid solution of platinic chloride is applied onto the FTO film of the FTO substrate by using a spray, the burning is carried out in the electrical furnace at a temperature of 450°C for one hour to sinter the platinum fine particles, thereby forming the platinum fine particle layer as the counter electrode 5. After that, portions of areas in the platinum fine particle layer and the FTO film, having widths of a = b = 1.5 mm, extending along two sides of the FTO substrate which are made at a right angle with each other are removed by the laser beam radiation (laser etching), and thus the glass substrate is exposed from these portions.

Next, after an ultraviolet (UV) cure adhesive agent is applied as the seal material 5 on the counter electrode (platinum fine particle layer) on the FTO substrate by carrying out the screen printing so as to have a thickness of 50 µm so that the power collecting portion is left in a size having an outer shape of 203 mm × 203 mm, and a width of 1.5 mm, the FTO substrate having the dye supporting porous titanium oxide layers 2a to 2d formed thereon is stuck to the other FTO substrate through the UV cure adhesive agent. In this connection, those FTO substrates are stuck to each other so that they are shifted from each other by 1.5 mm in the x-axis direction, and 1.5 mm in the y-axis direction. After that, an ultraviolet light is radiated to the UV cure adhesive agent, thereby causing the UV cure adhesive agent to cure.

On the other hand, 0.045 g (0.1 mol/L) of sodium iodide (NaI), 1.11 g (1.4 mol/L) of 1-propyl-2,3-dimethyl imidazolium iodide, 0.11 g (0.15 mol/L) of iodine (I₂), and 0.081 g (0.2 mol/L) of 4-tert-butyl pyridine were dissolved in 3 g of methoxy propionitrile, thereby preparing an electrolyte composition.

Next, the electrolyte composition described above was filled at a reduced pressure through the inlet formed in one corner portion of the FTO substrate having the counter electrode formed thereon to be statically placed within a pressurized vessel at 0.4 MPa filled with nitrogen (N₂), thereby perfectly filling the electrolyte composition in the inside of the space surrounded by the two sheets of FTO substrates described above and the seal materials. Next, the inlet was sealed with the UV cure adhesive agent and the glass substrate, thereby obtaining the dye-sensitized solar cell.

FIG. 10 shows an exterior appearance of the light receiving surface of the dye-sensitized solar cell. In FIG. 10, the dye supporting porous titanium oxide layer 2a displays the color (1) described above, the dye supporting porous titanium oxide layer 2b displays the color (2) described above, the dye supporting porous titanium oxide layer 2c displays the color (3) described above, and the dye supporting porous titanium oxide layer 2d displays the color (4) described above. Thus, a flower pattern stained with the green system colors is displayed in accordance with the pattern shapes and colors of those dye supporting porous titanium oxide layers 2a to 2d. Here, a total area of the dye supporting porous titanium oxide layer 2a is 1680.04 mm², a total area of the dye supporting porous titanium oxide layer 2b is 7362.86 mm², a total area of the dye supporting porous titanium oxide layer 2c is 2620.72 mm², and a total area of the dye supporting porous titanium oxide layer 2d is 17808.41 mm².

The open voltage, the short-circuit current, the fill factor, and the photoelectric conversion efficiency in a phase of radiation of a light quantity which is (1/10) of a pseudo-solar light (AM 1.5, 100 mW/cm²) of the dye-sensitized solar cell of Example 1 were measured. As a result, the open voltage was 0.653 (V), the short-circuit current was 1.02 (mA/cm²), the fill factor was 51.4 (%), and the photoelectric conversion efficiency was 3.43 (%). FIG. 11 shows current-voltage characteristics of the dye-sensitized solar cell.

Next, a dye-sensitized solar cell according to a second embodiment of the present invention will be described.

In this dye-sensitized solar cell, in the dye-sensitized solar cell according to the first embodiment, the electrolyte layer 6 is composed of an electrolyte composition which contains therein iodine, contains therein a compound which has at least one isocyanate group (-NCO) and which suitably further contains therein at least one or more nitrogen containing functional groups in the same molecule in addition to the at least one isocyanate group, and further contains therein a compound containing therein at least one or more nitrogen containing functional groups in addition to this compound. Although there is especially no limit to the compound having at least one or more isocyanate groups (-NCO), the compound concerned is preferably compatible with a solvent of an electrolyte, an electrolyte salt, and other addition agents. Although the compound containing at least one or more nitrogen containing functional groups is suitably an amine system compound, the present embodiment is by no means limited thereto. Although there is especially no limit to the amine system compound, the amine system compound is preferably compatible with a solvent of an electrolyte, an electrolyte salt, and other addition agents. The nitrogen containing functional group is made to exist together with the compound having at least one or more isocyanate groups, which especially, largely contributes to an increase in open voltage of the dye-sensitized solar cell. Any of the compounds previously stated can be used as the compound having at least one or more isocyanate groups.

Any of the matters other than the foregoing is similar to that in the dye-sensitized solar cell according to the first embodiment.

According to the second embodiment, in addition to the same advantage as that in the first embodiment, an advantage can be obtained such that the electrolyte layer 6 is made of the electrolyte composition containing therein the component having at least one or more isocyanate groups to allow both the short-circuit current and the open voltage to be increased, thereby making it possible to obtain the dye-sensitized solar cell having the very high photoelectric conversion efficiency.

### <Example 2>

In Example 1, in preparing the electrolyte composition, in addition to 0.045 g (0.1 mol/L) of sodium iodide (NaI), 1.11 g (1.4 mol/L) of 1-propyl-2,3-dimethyl imidazolium iodide, 0.11 g (0.15 mol/L) of iodine (I₂), and 0.081 g (0.2 mol/L) of 4-tert-butyl pyridine, 0.071 g (0.2 mol/L) of phenyl isocyanate was dissolved in 3 g of methoxy propionitrile. Others were similar to the case of Example 1, and under such a condition, the dye-sensitized solar cell was obtained.

Next, a description will be given with respect to a paper-covered night light type dye-sensitized solar cell according to a third embodiment of the present invention.

FIG. 12 shows the paper-covered night light type dye-sensitized solar cell. As shown in FIG. 12, the paper-covered night light type dye-sensitized solar cell has a box-like shape in which four side surfaces are composed of four panel-like dye-sensitized solar cells 11 to 14. Each of the dye-sensitized solar cells 11 to 14 is the same as the dye-sensitized solar cell according to the first embodiment, and thus the same stained pattern as that in Example 1 is shown in each of light receiving surfaces of the dye-sensitized solar cells 11 to 14.

FIG. 13 is an exploded perspective view in a state in which the dye-sensitized solar cells 11 to 14 are detached from the paper-covered night light type dye-sensitized solar cell. As shown in FIG. 13, an inner box 16 is adapted to be detachably accommodated in the inside of a box-like frame 15 to which the dye-sensitized solar cells 11 to 14 are adapted.

A box-like base 17 having an opened upper surface is provided in a lower portion of the frame 15. A jack 18 becoming an output terminal of the paper-covered night light type dye-sensitized solar cell is provided in one side surface of the base 17. The jack 18 is connected to an electric battery box which will be described later through a wiring 19.

The inner box 16 has four support posts 20 to 23. Details of a corner portion of an upper portion of the inner box 16 are shown in FIG. 14. As shown in FIG. 13 and FIG. 14, a metallic plate 24 is mounted on the support posts 20 to 23 by using screws 25, and a top plate 26 is mounted on the metallic plate 24. A socket 27 is mounted to a central portion of a lower surface of the metallic plate 24, and an electric light bulb 28 is mounted to the socket 27. The electric light bulb 28 is used for an illumination for the paper-covered night light type dye-sensitized solar cell. A wiring 29 is connected to the socket 27. One support post 22 of the support posts 20 to 23 is composed of a hollow metallic rod. The wiring 29 passes under a low surface of the metallic plate 24, further passes through the inside of the support post 22 through a hole 22a provided in a side surface of an upper portion of the support post 22, and is taken out from a lower portion of the support post 22 to be connected to a portion (not shown) for connection to the electric battery box which will be described later. A box portion 30 having an opened upper surface and an opened lower surface is provided in the lower portions of the support posts 20 to 23. The box portion 30 is adapted to be fixed to the base 17 provided in the lower portion of the frame 15. A recess portion 30a for preventing abutment of the jack 18 provided in the base 17 is provided in one corner portion of an electric battery box accommodating portion 30.

The electric battery box 31 is provided inside the base 17 provided in the lower portion of the frame 15. A rechargeable battery (not shown) for storing therein an electric energy generated by the dye-sensitized solar cells 11 to 14 is mounted to the electric battery box 31. As shown in FIG. 15, a square-shaped hole 31a is provided in one side surface of the electric battery box 31, and a square-shaped hole 17a is provided in a portion of one side surface of the base 17 corresponding to the hole 31a. A push-button switch 32 is provided inside the hole 31a of the electric battery box 31. While the switch 32 is held in an ON state, a current is caused to flow from the rechargeable battery within the electric battery box 31 to the electric light bulb 28 through the wiring 29 to turn ON the electric light bulb 28. While the switch 32 is held in an OFF state, the current is cut off between the rechargeable battery and the electric light bulb 28, and thus the electric light bulb 28 is not turned ON. Normally, the switch 32 is held in the OFF state.

A wiring 33 which is connected to an output terminal of the four dye-sensitized solar cells 11 to 14 is fixed to the frame 15. The wiring 33 is connected to the electric battery box 31, and thus the electric energy generated in the dye-sensitized solar cells 11 to 14 is adapted to charge the rechargeable battery within the electric battery box 31 through the wiring 33.

Next, a description will be given with respect to an example of a method of using the paper-covered night light type dye-sensitized solar cell.

The paper-covered night light type dye-sensitized solar cell receives the solar light and the indoor light in the daytime, so that the electric power is generated by the dye-sensitized solar cells 11 to 14. The electric energy obtained through the power generation is stored in the rechargeable battery within the electric battery box 31. When the night comes on, and thus the room becomes dark, the switch 32 is turned ON. At this time, the current is caused to flow from the rechargeable battery within the electric battery box 31 to the electric light bulb 28 through the wiring 29 to turn ON the electric light bulb 28, and as a result, the paper-covered night light type dye-sensitized solar cell operates as the paper-covered night light.

In addition, the paper-covered night light type dye-sensitized solar cell can be connected to an electronic apparatus or the like to be used by using the jack 18 of the base 17 in the paper-covered night light type dye-sensitized solar cell.

According to the third embodiment, not only the dye-sensitized solar cells 11 to 14 are each superior in the design property, but also the paper-covered night light type dye-sensitized solar cell is composed of the dye-sensitized solar cells 11 to 14. Therefore, it is possible to obtain the paper-covered night light type dye-sensitized solar cell which can obtain the high power generation efficiency from the indoor light as well because the photoelectric conversion efficiency of each of the dye-sensitized solar cells 11 to 14 is high, and which is very excellent as an interior accessory as well which is integrated into the human life.

Although the embodiments of the present invention, and Examples of the embodiments have been concretely described so far, the present invention is by no means limited to the embodiments and Examples described above, and thus various changes based on the technical idea of the present invention can be made.

For example, the numerical values, the structures, the compositions, the shapes, the materials, the raw materials, the processes, and the like which have been given in the embodiments and Examples described above are merely an example, and thus numerical values, structures, compositions, shapes, materials, raw materials, processes and the like which are different from those given in the embodiments and Examples described above may be used as may be necessary.

Specifically, although, for example, in the third embodiment described above, the electric battery box 31 is provided in the lower portion of the frame 15, the electric battery box 31 may also be provided in other position, for example, in the lower portion of the inner box 16. In addition, a light emitting diode, for example, may also be used instead of using the electric light bulb 28.

### Description of Reference Symbols

1 ... Transparent conductive substrate, 1a ... Transparent substrate, 1b ... Transparent conductive layer, 2a to 2d ... Dye supporting porous titanium oxide layer, 3 ... Transparent conductive substrate, 3a ... Transparent substrate, 3b ... Transparent conductive layer, 4 ... Counter electrode, 5 ... Seal material, 6 ... Electrolyte layer, 7 ... Power collecting layer, 8 ... Inlet, 11 to 14 ... Dye-sensitized solar cell, 15 ... Frame, 16 ... Inner box, 17 ... Base, 18 ... Jack, 28 ... Electric light bulb

## Claims

1. A dye-sensitized solar cell, comprising:
a transparent conductive substrate;
one or multiple porous titanium oxide layers, on said transparent conductive substrate, made of titanium oxide fine particles and supporting a sensitizing dye(s);
a counter electrode provided so as to face said one or multiple porous titanium oxide layers; and
an electrolyte layer between said one or multiple porous titanium oxide layers and said counter electrode,
wherein said one or multiple porous titanium oxide layers are formed so as to display a predetermined color(s), and compose a predetermined pattern(s) in accordance with selection of a thickness, a lamination structure, a particle diameter of the titanium oxide fine particles, or a combination ratio of two or more kinds of titanium oxide fine particles when the titanium oxide fine particles are composed of the two or more kinds of titanium oxide fine particles different in particle diameter from one another.

2. The dye-sensitized solar cell according to claim 1, wherein said counter electrode is provided on a transparent conductive substrate.

3. The dye-sensitized solar cell according to claim 2, wherein said transparent conductive substrate having said one or multiple porous titanium oxide layers provided thereon, and said transparent conductive substrate having said counter electrode provided thereon are disposed so as to be shifted from each other, and an outer peripheral portion of a region held between said two transparent conductive substrates is sealed with a seal material.

4. The dye-sensitized solar cell according to claim 3, wherein each of said transparent conductive substrate having said one or multiple porous titanium oxide layers provided thereon, and said transparent conductive substrate having said counter electrode provided thereon is composed of a substrate obtained by providing a transparent conductive layer on an insulating transparent substrate, and portions of said transparent conductive layers located in outer peripheral portions of said two transparent conductive substrates and sealed with said seal material are removed.

5. The dye-sensitized solar cell according to claim 4, wherein a power collecting layer is provided on said transparent conductive layer in an outside of said seal material.

6. The dye-sensitized solar cell according to claim 1, wherein said one or multiple porous titanium oxide layers have a thickness which is n (n is an integral number equal to or larger than 1) times as large as a predetermined reference thickness.

7. The dye-sensitized solar cell according to claim 6, wherein the thickness of said one or multiple porous titanium oxide layers is equal to or smaller than 50 µm.

8. The dye-sensitized solar cell according to claim 7, wherein said one or multiple porous titanium oxide layers have a layer having the predetermined reference thickness in common with one another.

9. The dye-sensitized solar cell according to claim 8, wherein said layer having the predetermined reference thickness in common with one another is a porous titanium oxide layer having a thickness of 3 µm and made of titanium oxide fine particles having a particle diameter of 20 nm.

10. The dye-sensitized solar cell according to claim 9, wherein said one or multiple porous titanium oxide layers contain therein at least one selected from the group composed of a first porous titanium oxide layer having a thickness of 3 µm and made of titanium oxide fine particles having a particle diameter of about 20 nm, a second porous titanium oxide layer having a thickness of 6 µm and made of titanium oxide fine particles having a particle diameter of about 20 nm, a third porous titanium oxide layer composed of a porous titanium oxide layer having a thickness of 3 µm and made of titanium oxide fine particles having a particle diameter of about 20 nm and a porous titanium oxide layer lying said porous titanium oxide layer, having a thickness of 3 µm and made of titanium oxide fine particles having a particle diameter of about 400 nm, and a fourth porous titanium oxide layer composed of a porous titanium oxide layer having a thickness of 3 µm and made of titanium oxide fine particles having a particle diameter of about 20 nm and a porous titanium oxide layer, having a thickness of 6 µm, lying said porous titanium oxide layer, made of titanium oxide fine particles having a particle diameter of about 20 nm and titanium oxide fine particles having a particle diameter of about 400 nm, and containing therein 20 wt% titanium oxide fine particles having the particle diameter of about 400 nm.

11. A method of manufacturing a dye-sensitized solar cell, comprising:
the process for screen-printing a paste having titanium oxide fine particles dispersed therein either in the same pattern or in different patterns either one time or multiple times on a transparent conductive substrate;
the process for burning said paste, thereby forming one or multiple porous titanium oxide layers;
the process for causing said one or multiple porous titanium oxide layers to support a sensitizing dye(s);
the process for providing a counter electrode so as to face said one or multiple porous titanium oxide layers; and
the process for providing an electrolyte layer between said one or multiple porous titanium oxide layers and said counter electrode,
wherein said one or multiple porous titanium oxide layers are formed so as to display predetermined colors, respectively, and compose a predetermined pattern(s) in accordance with selection of a thickness, a lamination structure, a particle diameter of the titanium oxide fine particles, or a combination ratio of two or more kinds of titanium oxide fine particles when the titanium oxide fine particles are composed of the two or more kinds of titanium oxide fine particles different in particle diameter from one another.

12. A dye-sensitized solar cell, comprising:
a transparent conductive substrate;
one or multiple porous semiconductor layers, on said transparent conductive substrate, made of semiconductor fine particles and supporting a sensitizing dye(s);
a counter electrode provided so as to face said one or multiple porous semiconductor layers; and
an electrolyte layer between said one or multiple porous semiconductor layers and said counter electrode,
wherein said one or multiple porous semiconductor layers are formed so as to display a predetermined color(s) and compose a predetermined pattern(s) in accordance with selection of a thickness, a lamination structure, particle diameters of the semiconductor fine particles, or a combination ratio of two or more kinds of semiconductor fine particles when the semiconductor fine particles are composed of the two or more kinds of semiconductor fine particles different in particle diameter from one another.

13. A method of manufacturing a dye-sensitized solar cell, comprising:
the process for screen-printing a paste having semiconductor fine particles disposed therein either in the same pattern or in different patterns either one time or multiple times on a transparent conductive substrate;
the process for burning the paste, thereby forming one or multiple porous semiconductor layers;
the process for causing said one or multiple porous semiconductor layers to support a sensitizing dye(s);
the process for providing a counter electrode so as to face said one or multiple porous semiconductor layers; and
the process for providing an electrolyte layer between said one or multiple porous semiconductor layers and said counter electrode,
wherein said one or multiple porous semiconductor layers are formed so as to display a predetermined color(s) and compose a predetermined pattern(s) in accordance with selection of a thickness, a lamination structure, particle diameters of the semiconductor fine particles, or a combination ratio of two or more kinds of semiconductor fine particles when the semiconductor fine particles are composed of the two or more kinds of semiconductor fine particles different in particle diameter from one another.
